# FASCICULE DE BREVET EUROPEEN

(11) **EP 4 173 249 B1**
(45) Date de publication et mention de la délivrance du brevet: **28.01.2026**
(21) Numéro de dépôt: 21737485.9
(22) Date de dépôt: 14.06.2021
(51) Int. Cl.: H04L 9/40, H04L 67/12, H04L 12/28

(54) **GESTION DE LA SÉCURITÉ D'UN OBJET COMMUNICANT**
VERWALTUNG DER SICHERHEIT EINES KOMMUNIZIERENDEN OBJEKTS
MANAGEMENT OF THE SECURITY OF A COMMUNICATING OBJECT

(30) Priorité: 26.06.2020 FR 2006746
(43) Date de publication de la demande: 03.05.2023
(73) Titulaire: Orange S.A., 92130 Issy-les-Moulineaux (FR)
(72) Inventeur: FONTAINE, Fabrice, 92326 CHATILLON (FR); ARMAND, David, 92326 CHATILLON (FR)
(86) Numéro de dépôt international: PCT/FR2021/051059
(87) Numéro de publication internationale: WO 2021/260288

(56) Documents cités:
- US-A1- 2015 067 762
- US-A1- 2017 289 184
- ATTOUCHI KOUTHEIR ET AL: "Memory monitoring in a multi-tenant OSGi execution environment", 1 January 2014 (2014-01-01), New York, New York, USA, pages 107 - 116, XP055782361, ISBN: 978-1-4503-2577-6, Retrieved from the Internet <URL:https://dl.acm.org/doi/pdf/10.1145/2602458.2602467> DOI: 10.1145/2602458.2602467
- MAUREL YOANN ET AL: "Adaptive monitoring of end-user OSGi-based home boxes", 1 January 2012 (2012-01-01), New York, New York, USA, pages 157, XP055782550, ISBN: 978-1-4503-1345-2, Retrieved from the Internet <URL:https://dl.acm.org/doi/pdf/10.1145/2304736.2304763> DOI: 10.1145/2304736.2304763
- LABS SIDN ET AL: "SPIN: a User-centric Security Extension for In-home Networks 1/12 Classification Public Authors Contact", 30 June 2017 (2017-06-30), XP055782365, Retrieved from the Internet <URL:https://www.sidnlabs.nl/downloads/jK-ApC10TLqGf6iKbNZNYQ/8bb09c6fcc25c3b6f8fe9b8517bce5b8/SIDN-TR-2017-002.pdf> [retrieved on 20210305]
- TUUKKA MIETTINEN ET AL: "A Method for the Resource Monitoring of OSGi-based Software Components", SOFTWARE ENGINEERING AND ADVANCED APPLICATIONS, 2008. SEAA '08. 34TH EUROMICRO CONFERENCE, IEEE, PISCATAWAY, NJ, USA, 3 September 2008 (2008-09-03), pages 100 - 107, XP031380034, ISBN: 978-0-7695-3276-9
- LOPEZ DE VERGARA J E ET AL: "An autonomic approach to offer services in OSGi-based home gateways", COMPUTER COMMUNICATIONS, ELSEVIER SCIENCE PUBLISHERS BV, AMSTERDAM, NL, vol. 31, no. 13, 15 August 2008 (2008-08-15), pages 3049 - 3058, XP023437896, ISSN: 0140-3664, [retrieved on 20080424], DOI: 10.1016/J.COMCOM.2008.04.010

## Description

### Domaine de l'invention

Le domaine de l'invention est celui des réseaux de communication locaux, notamment, mais non exclusivement, des réseaux de communication domestiques, comprenant un équipement ou passerelle d'accès et une pluralité d'objets communicants, ou connectés, tels que des ordinateurs, tablettes, smartphones, mais également des caméras de type webcams, des stations météo, des capteurs, des thermostats, etc.

Plus précisément, l'invention concerne la gestion d'une politique de sécurité sur la passerelle d'un tel réseau de communication local.

### Art antérieur et ses inconvénients

Actuellement, lorsqu'un objet communicant est connecté dans un réseau de communication, et souhaite échanger des données sur ce réseau, il lui est nécessaire de se faire connaître de la passerelle domestique. Celle-ci lui affecte notamment une adresse, qui lui permet de communiquer à la fois sur le réseau local et le réseau extérieur, et mémorise certaines des caractéristiques et données de l'objet. Par la suite, les communications de l'objet transitent par la passerelle.

Il existe donc un risque pour la passerelle : l'un de ces objets communicants peut présenter une ou plusieurs failles de sécurité, susceptibles de permettre à un individu malveillant de pénétrer sur le réseau local, et d'endommager ou surcharger la passerelle.

Il est connu d'imposer des règles de sécurité à des objets connectés, en termes de communication. Par exemple, la demande de brevet français publiée sous le numéro FR3079380 propose d'associer à un objet connecté un certain nombre de règles restreignant ses possibilités de communication (liste noire d'équipements inaccessibles pour l'objet, limitation du volume maximum de données échangeables sur le réseau, etc.) De telles règles de sécurité ne concernent cependant pas la passerelle elle-même, qui reste vulnérable.

Il existe donc un besoin d'une technique de gestion sécuritaire d'une passerelle d'un réseau de communication local qui ne présente pas ces différents inconvénients de l'art antérieur.

### Exposé de l'invention

L'invention répond à ce besoin en proposant un procédé de gestion d'une passerelle domestique d'un réseau de communication local, ladite passerelle comportant une pluralité de composants, dits composants sensibles, ledit réseau comprenant au moins un objet communicant apte à être connecté audit réseau via la passerelle. Un tel procédé de gestion comprend sur un dispositif de gestion :
- une étape d'acquisition d'au moins une règle de sécurité, relative à au moins une interaction dudit objet avec au moins un desdits composants de ladite passerelle ;
- une étape d'observation mettant en œuvre une observation d'au moins une interaction dudit objet communicant avec au moins un desdits composants de ladite passerelle ;
- une étape de décision, en fonction de ladite observation, d'une action au moins sur ledit objet connecté.

Ainsi, l'invention repose sur une approche nouvelle et inventive de la gestion des règles de sécurité qui s'appliquent aux équipements, ou objets connectés, d'un réseau de communication local, tel qu'un réseau domestique par exemple, dans le but de protéger la passerelle de service.

Le principe de cette sécurisation est de déterminer, en relation avec l'objet connecté, au moins une règle de sécurité relative à l'un des composants de la passerelle. Ainsi par la suite, si cette règle est transgressée, le procédé peut prendre une action de protection en agissant sur l'objet connecté (avertissement, rejet, désappairage, etc.)

En d'autres termes, le procédé de gestion réalise un « confinement » de l'objet, qui consiste à mettre en place différentes règles barrière afin de s'assurer que l'objet ne puisse perturber ou « contaminer » les composants logiciels ou matériels sensibles de la passerelle, et par là mettre en danger la passerelle elle-même, les équipements du réseau local ou les équipements d'un réseau étendu, par exemple les plateformes de service.

Ce procédé permet par exemple d'empêcher un objet malicieux de remonter des données erronées ou bien trop nombreuses qui pourraient provoquer un écroulement des autres services de la passerelle en mobilisant ses ressources matérielles et/ou logicielles et/ou d'atteindre d'autres objets du réseau en installant des programmes pirates sur la passerelle.

L'invention propose de définir des règles de sécurité spécifiques à chaque objet communicant, en fonction des besoins en ressources de l'objet considéré, de son type, de son degré de dangerosité, etc.

On entend par « objet connecté » tout objet ou équipement électronique capable de communiquer avec un autre objet ou équipement sur un réseau local ou étendu via la passerelle. Par exemple, il peut s'agir d'un smartphone (pour téléphone intelligent en anglais), une tablette, un ordinateur portable, un thermomètre, une caméra, une prise connectée, etc. Un tel objet connecté comporte un ensemble de caractéristiques associées, qu'il s'agisse de fonctions rendues (donner l'heure, la température, *streamer* un flux vidéo, etc.) ou de flux manipulés, associés aux fonctions en entrée ou en sortie de l'objet (commandes, réponses, messages, flux de données, par exemple audiovisuels, etc.) Un tel objet connecté utilise les ressources de la passerelle de service (mémoire, processeur, bus de données, etc.).

On entend par « réseau local » un réseau de communications, aussi appelé dans la suite réseau domestique, qui relie ensemble, avec ou sans fils, les équipements terminaux, ou plus simplement objets (ordinateurs, périphériques d'impression, de stockage, objets connectés, etc.) aptes à communiquer ensemble. Un réseau domestique comporte un équipement routeur, aussi communément appelé passerelle, élément intermédiaire assurant la redirection, ou routage, des paquets de données entre les différents terminaux et réseaux qui lui sont connectés. L'utilisateur d'un tel réseau peut exécuter un service donné sur un objet donné disposant de caractéristiques propres (par exemple, commander une caméra, ouvrir une porte, etc.), depuis son réseau local (aussi appelé LAN) ou depuis un réseau large bande (aussi appelé WAN) via la passerelle.

On entend par composant sensible de la passerelle un élément logiciel ou matériel de la passerelle : bus de données, mémoire, interface, programme logiciel, élément de *firmware,* etc.

On entend par « règle de sécurité » une règle qui établit une relation entre l'objet et un tel composant, défini par une limite au moins. Par exemple, une telle règle établit qu'un objet connecté ne peut utiliser plus d'un certain pourcentage du processeur de la passerelle, ne peut échanger des messages sur l'un des bus de la passerelle au-delà d'un certain débit ou nombre, ne peut utiliser certains programmes ou interfaces (par exemple l'interface série USB, ou un serveur WEB de la passerelle), etc.

On entend par « observation » une captation et mesure des interactions d'un objet avec lesdits composants : nombre d'accès mémoire, taille en mémoire, pourcentage d'utilisation d'un processeur, accès aux interfaces, etc.

On entend par « action » sur un objet le fait d'agir sur son fonctionnement (lui transmettre un message d'alerte, bloquer son opération en cours, le déconnecter, le rejeter, le désappairer, l'appairer, modifier une de ses règles de sécurité, etc.)

Par acquisition de la règle, on entend tout mode d'obtention envisageable : les règles de sécurité peuvent être affectées à partir d'une base de données, ou tout espace mémoire accessible depuis la passerelle domestique (serveur réseau, disque dur, espace mémoire de la passerelle, etc.) Alternativement, la règle peut être apprise, déduite, calculée à partir de données initiales, etc.

Selon un mode de réalisation, le procédé comporte en outre une étape d'enregistrement de l'objet dans une zone mémoire dite de confinement, l'objet enregistré comportant au moins une donnée d'identification de l'objet et au moins une règle de sécurité.

Avantageusement selon ce mode, l'objet est « virtualisé » dans une zone de confinement qui comprend au moins un identifiant et les règles de sécurité qui lui sont associées. Ceci permet à la passerelle de savoir, à partir de l'identifiant, si l'objet est confiné et d'accéder rapidement aux règles de sécurité.

Par zone de confinement on entend un espace mémoire dans lequel sont enregistrés les objets confinés. Cette zone peut être interne à la passerelle ou non, sécurisée ou non.

Par donnée d'identification de l'objet on entend ici un identifiant unique de l'objet permettant à la passerelle de l'identifier de manière univoque dans le réseau local. Il peut s'agir de son adresse MAC, pour « Media Access Control », en anglais). Cette adresse MAC est un identifiant physique stocké dans une interface de l'équipement client, par exemple sa carte réseau. A moins qu'elle n'ait été modifiée par l'utilisateur de l'équipement client, elle est unique. Il peut encore s'agir d'une autre donnée qui lui est spécifique, par exemple une adresse IP, ou un UUID (pour «Universally Unique Identifier » en anglais, par exemple dans le cas d'un protocole Bluetooth), ou un IMSI (pour International Mobile Subscriber Identity), ou un IPUI (International Portable User Identity, identifiant unique de l'objet dans le cadre de la norme DECT-ULE), etc.

Selon une variante de ce mode, le procédé comporte en outre une étape de sortie de l'objet de ladite zone mémoire de confinement lorsqu'un critère de déconfinement est rempli.

Avantageusement selon ce mode, l'objet placé en confinement peut être déconfiné dès qu'il n'est plus jugé nécessaire de le surveiller. On entend par déconfinement la sortie de l'objet de la zone de confinement. L'enregistrement peut être effacé ou déplacé, ou autre. Ceci permet au procédé de surveiller seulement les objets pour lesquels le critère de déconfinement n'est pas rempli (parce que l'objet n'est pas à jour, ou vient de se connecter, ou pour toute autre raison qui le rend suspect). Le critère de déconfinement peut ainsi correspondre à un intervalle de temps (ou timer), une mise à jour réussie d'un logiciel de l'objet, une augmentation des capacités de la passerelle, une modification de son environnement, etc.

Selon un autre mode de réalisation, ladite au moins une règle de sécurité est acquise après une phase de détection de la connexion dudit objet communicant inconnu à ladite passerelle.

Avantageusement selon ce mode, une première phase d'acquisition des règles de sécurité est initiée sur détection de la connexion d'un nouvel objet communicant dans le réseau. Par connu, on entend que la passerelle a déjà mémorisé au moins un identifiant de l'objet. Ainsi l'objet inconnu pourra-t-il être rejeté rapidement si son comportement n'est pas adéquat, ce qui limite les risques pour la passerelle. En effet, un objet connu de la passerelle peut souvent être considéré plus fiable qu'un objet inconnu.

Selon un mode de réalisation, ladite au moins une règle de sécurité est acquise via une étape d'apprentissage du comportement de l'objet.

Avantageusement selon ce mode, les règles de sécurité sont affectées après une phase d'apprentissage par observation. On accepte par exemple la connexion de l'objet, puis on observe pendant une période de temps les interactions de l'objet communicant avec les composants de la passerelle, afin d'en déduire un ensemble de préceptes caractéristiques d'un fonctionnement « normal » de l'objet communicant en relation avec la passerelle. On peut créer alors, sur la base de ces préceptes, un ensemble d'une ou plusieurs règles de sécurité spécifique(s) à l'objet communicant dont le fonctionnement a été observé ou commun à un type d'objets (il peut s'agir du même modèle d'objet dans un réseau local ou dans un parc de réseaux locaux administrés par plusieurs passerelles). Cette phase d'apprentissage peut avoir une durée paramétrable (nombre d'heures, nombre de jours, nombre d'accès aux composants de la passerelle, etc.)

Selon un autre mode de réalisation, ladite au moins une règle de sécurité est acquise en fonction d'une donnée caractéristique de l'objet.

Avantageusement selon ce mode, les objets de même type, ou même catégorie, ou partageant une information commune (par exemple remontant le même type d'information, ou du même constructeur, ou du même revendeur, etc.) peuvent être affectés des mêmes règles de sécurité. Par exemple un serveur peut centraliser les données pour les objets communicants de type « caméra », en vue de les partager avec plusieurs passerelles du même constructeur/opérateur. Tous les objets de ce type bénéficieront par exemple par défaut des mêmes règles de sécurité.

Selon un autre mode de réalisation, ladite au moins une règle de sécurité associée audit objet communicant comprend au moins un élément parmi :
- un volume maximum de données que l'objet communicant est autorisé à mémoriser dans la passerelle,
- un volume maximum de données que l'objet communicant est autorisé à échanger sur l'un des bus de données de la passerelle,
- un pourcentage maximum d'utilisation d'un processeur de la passerelle, ou
- un accès à un module de communication la passerelle,
- un accès à un module logiciel de la passerelle.

Avantageusement, il est possible de définir une règle portant sur un ou plusieurs des composants sensibles de la passerelle. Un objet communicant de type capteur de température par exemple n'est censé mémoriser que de faibles quantités de données (enregistrements contenant la température mesurée, éventuellement horodatée). Il est donc possible de définir une taille maximale des données que le capteur peut mémoriser, exprimée en octets ou en kilooctets. Le stockage en mémoire de la passerelle d'un volume de données supérieur à ce volume maximum autorisé par la règle de sécurité établie est indicatif d'un comportement déviant, ou d'une activité malveillante. Par mémoire on entend ici une zone mémoire vive ou morte, interne ou externe (disque dur par exemple), de la passerelle.

Selon un autre exemple, un envoi massif de requêtes sur l'un des bus de la passerelle par un tel objet communicant peut aussi être indicatif d'un comportement déviant, tel qu'une participation à une attaque dite de *botnet* (de l'anglais, contraction de « robot » et « réseau »).

Par ailleurs un tel objet n'est pas destiné à accéder aux modules de communication (par exemple le module radio Wi-Fi) ou aux programmes logiciels (par exemple le serveur Web) de la passerelle.

Selon un autre mode de réalisation, en cas de détection d'une interaction dudit objet communicant avec au moins un composant contraire à ladite règle de sécurité créée, ladite action sur l'objet connecté peut être choisie parmi :
- une modification de ladite au moins une règle de sécurité ;
- une étape de blocage de ladite interaction ;
- un rejet de l'objet ;
- un désappairage de l'objet.
Ainsi, dès que l'on observe un comportement déviant de l'objet communicant, qui ne correspond pas aux règles, il peut lui être immédiatement interdit, avant même son désappairage, d'accéder à ce composant. Par exemple, si l'on constate un comportement malveillant, on peut agir en désappairant un objet préalablement appairé (associé) ou en le rejetant (un objet en cours d'appairage), mais on peut aussi durcir la règle (réduire le pourcentage d'utilisation d'un processeur, le nombre d'accès à une mémoire ou à un bus, etc.) afin de protéger la passerelle tout en conservant un service minimal (quoiqu'éventuellement dégradé) pour l'utilisateur.

Selon un autre mode, ladite au moins une règle de sécurité est affectée d'un indice de gravité et l'action sur l'objet connecté est choisie en fonction de cet indice.

Avantageusement selon ce mode, on peut prévoir de classer les règles en fonction de la gravité des infractions que leur violation entraîne (classification en règles « strictes » dont l'infraction est interdite, ou en règles « souples » qui peuvent être adaptées, ou affectation de priorités aux règles, etc.) Ceci permet de déterminer la meilleure action à effectuer sur l'objet à un instant donné.

Selon un mode de réalisation, ladite au moins une règle de sécurité peut être modifiée en cas de détection d'une modification dans le contexte de la passerelle domestique.

Avantageusement selon ce mode, un tel procédé comprend une modification de ladite règle de sécurité créée, par exemple en cas de modification des capacités de la passerelle, de la présence ou non d'un utilisateur dudit objet communicant au sein dudit réseau de communication local, du rapprochement de l'objet mesuré par la force du signal, de la mise à jour de l'objet, du fonctionnement de l'objet en dehors de plages horaires habituels (exemple : une caméra qui renvoie des données la journée au lieu de la nuit ou inversement) , etc.

L'invention concerne également un dispositif de gestion d'une passerelle domestique d'un réseau de communication local, ladite passerelle comportant une pluralité de composants, dits composants sensibles, ledit réseau comprenant au moins un objet communicant apte à être connecté audit réseau via la passerelle, le dispositif comprenant les modules suivants :
- un module d'acquisition d'au moins une règle de sécurité, relative à au moins une interaction de l'objet avec au moins un desdits composants de ladite passerelle ;
- un module d'observation mettant en œuvre une observation d'au moins une d'interaction dudit objet communicant avec au moins un desdits composants de ladite passerelle ;
- un module de décision, en fonction de ladite observation, d'une action au moins à effectuer sur ledit objet.

L'invention concerne également une passerelle incluant un dispositif de gestion tel que précédemment décrit.

Plus généralement, une telle passerelle est apte à mettre en œuvre un procédé de gestion local tel que décrit précédemment.

L'invention concerne également un produit programme d'ordinateur comprenant des instructions de code de programme pour la mise en œuvre d'un procédé de gestion tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de gestion selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur. D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet. Alternativement, le support d'enregistrement peut être un circuit intégré dans lequel le programme est incorporé, le circuit étant adapté pour exécuter ou pour être utilisé dans l'exécution du procédé de gestion précité.

L'équipement d'accès et le programme d'ordinateur correspondants précités présentent au moins les mêmes avantages que ceux conférés par le procédé de gestion selon la présente invention.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig. 1] la figure 1 présente une vue schématique d'un réseau local de communication et de différents objets communicants qui y sont connectés, selon un mode de réalisation de l'invention;
[Fig. 2] la figure 2 propose un schéma synoptique d'un équipement d'accès ou d'une passerelle résidentielle mettant en œuvre le procédé de la figure 3 selon un mode de réalisation de l'invention.
[Fig. 3] la figure 3 présente sous forme de logigramme les différentes étapes du procédé de gestion selon un mode de réalisation de l'invention.

### Description détaillée de modes de réalisation de l'invention

Le principe général de l'invention repose sur l'établissement de règles de sécurité spécifiques à chaque objet communicant d'un réseau de communication local pour ce qui concerne les composants matériels et/ou logiciels de la passerelle de service.

On s'attache plus en détail dans la suite de ce document à décrire la mise en œuvre d'un mode de réalisation de l'invention dans le cadre d'un réseau domestique, chez un utilisateur particulier. L'invention s'applique bien sûr également à tout autre type de réseau de communication local (LAN, pour « Local Area Network »), auquel une pluralité d'équipements de communication sont connectés.

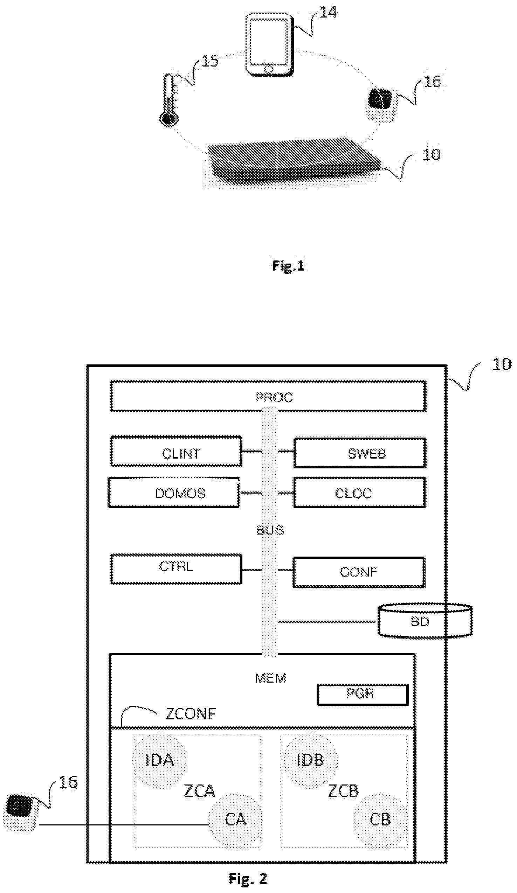

Dans un tel réseau domestique, représenté schématiquement sur la figure 1, une passerelle résidentielle référencée 10 permet de relier un réseau de communication local et un réseau étendu tel que le réseau Internet (non représenté). Une telle passerelle résidentielle 10 intègre notamment un serveur DHCP : elle effectue le routage des paquets de données sur le réseau, et peut également jouer le rôle de pare-feu, de proxy, de relais DNS (pour l'anglais « Domain Name Server »), de fournisseur de services IGD (pour l'anglais « Internet Gateway Device », dispositif de passerelle Internet), etc. A titre d'exemple, une telle passerelle de service peut être un équipement connu en France sous le nom de « box », tel qu'un équipement LiveBox (produit commercialisé d'Orange, marque déposée).

Elle accède également également à une ou plusieurs bases de données à partir de laquelle peuvent être récupérées ou élaborées les règles de sécurité spécifiques à chaque objet communicant.

Dans l'exemple de la figure 1, trois objets connectés sont également représentés sur le réseau local : une tablette 14 ; une webcam 16 ; un thermostat 15. Naturellement, de nombreux autres objets communicants peuvent être présents sur le réseau local de l'utilisateur.

Ces objets communicants peuvent être reliés au réseau, via la passerelle, par voie filaire (câble Ethernet, port USB (pour l'anglais « Universal Serial Bus »), etc.) ou sans fil de type WiFi (pour « Wireless Fidelity » en anglais), Bluetooth, BLE, Thread, Zigbee (IEEE 802.15.4), Z-Wave, DECT (« Digital Enhanced Cordless Telecommunications » en anglais) et/ou DECT ULE (pour « DECT Ultra Low Energy» en anglais). Ils comprennent tous types d'objets physiques, aptes à communiquer numériquement sur le réseau local, en vue d'un échange de données. Ils comprennent également les applications logicielles associées à certains objets connectés non IP (« Internet Protocol »), fonctionnant sur des technologies sans fil tels que BLE (pour « Bluetooth^{®} Low Energy »), Z-wave^{®}, Thread^{®}, etc.

Parmi les objets communicants de la figure 1, on peut imaginer que le Fournisseur d'Accès Internet (FAI), qui a fourni à l'utilisateur la passerelle résidentielle 10 connaît les objets 14 et 15 et peut éventuellement fournir à l'administrateur du réseau local des règles de sécurité prédéfinies pour ces objets communicants, qui pourraient être complétées et/ou affinées au cours d'une phase d'apprentissage qui suit leur première connexion au réseau, ou la mise à jour de leur « firmware » (en français « micrologiciel »). A l'inverse, d'autres objets communicants comme la webcam 16 peuvent provenir d'autres sources et d'autres provenances : le fournisseur d'accès peut néanmoins disposer de données les concernant, comme par exemple leur fabriquant, un identifiant unique UUID (pour «Universally Unique Identifier » en anglais), un nom, un type, etc.

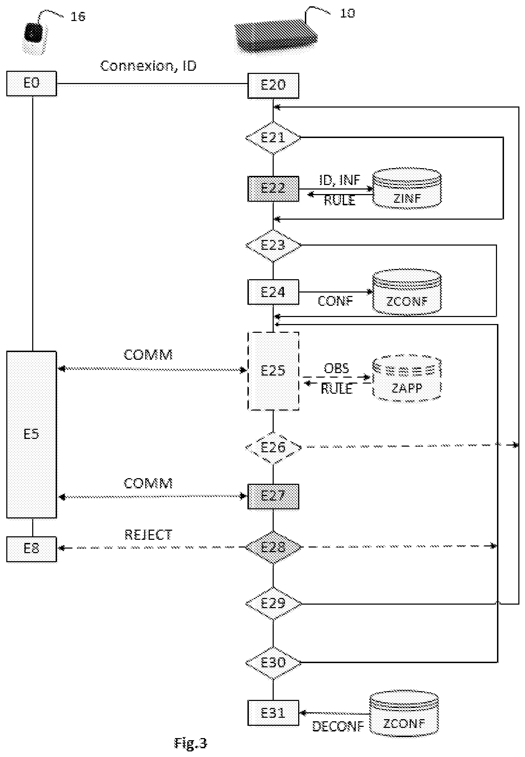

En tout état de cause, il est important de pouvoir établir des règles de sécurité spécifiques et applicables à chacun de ces différents objets communicants, afin de ne pas endommager ou surcharger la passerelle. Pour ce faire, un mode de réalisation de l'invention repose sur le logigramme de la figure 3.

La Figure 2 présente, en relation avec la figure 3, la structure matérielle d'un équipement d'accès, ou passerelle, selon un mode de réalisation de l'invention
Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, une telle passerelle résidentielle 10 comprend une mémoire MEM, une unité de traitement PROC équipée par exemple d'un processeur, et pilotée par un programme d'ordinateur PGR, représentatif du procédé de gestion, stocké dans une mémoire morte de MEM (par exemple une mémoire ROM ou un disque dur). A l'initialisation, les instructions de code du programme d'ordinateur sont par exemple chargées dans une mémoire vive de MEM avant d'être exécutées par le processeur de l'unité de traitement.

Dans les modes de réalisation décrits en référence à la figure 2, la passerelle 10 comporte en outre une zone de confinement ZCONF. Cette zone de sécurité ZCONF est hébergée dans la mémoire MEM. Elle comporte pour chaque objet, identifié par un identifiant unique notée ID, une zone de données. Sur la figure 2, les objets A et B correspondant par exemple à deux des objets connectés 14-16 de la figure 1 y sont représentés dans leurs zones respectives ZCA et ZCB. Chaque zone contient donc :
- une identité de l'objet (identifiant unique ID - IDA,IDB) et optionnellement un ensemble d'informations plus spécifiques (nom, type, fonctions, etc. de l'objet);
- une zone de données ZC (ZCA, ZCB) contenant notamment, l'ensemble des règles de sécurité qui sont associées à cet objet en relation avec les composants de la passerelle (pourcentage maximum d'utilisation d'un des bus, d'un des processeurs, de la mémoire, etc.) ;
- un logiciel dit module de communication client (CA, CB), chargé des liaisons avec l'objet connecté sur le réseau local.
Selon d'autres modes de réalisation, le module de communication client se trouve à l'extérieur de la zone de confinement, et peut être partagé par plusieurs objets.
Selon d'autres modes de réalisation, une zone de confinement peut être partagée par plusieurs objets qui ont les mêmes règles.
Le processeur de l'unité de traitement pilote l'enregistrement des données relatives aux interactions des objets communicants avec la passerelle dans la zone de confinement ZCONF, à l'aide d'un module noté CONF et d'une base de données BD (qui peut être interne ou externe, prendre la forme d'un disque dur, d'un serveur, d'une mémoire, etc.) En mode de fonctionnement sécuritaire, le processeur de l'unité de traitement pilote également la détection d'interactions inhabituelles, leur blocage, et le déclenchement d'actions liées au problème de sécurité détecté, conformément au logigramme de la figure 3, à l'aide d'un module noté CTRL.
Dans les modes de réalisation décrits en référence à la figure 2, la passerelle 10 comporte en outre un certain nombre de modules dits « sensibles », c'est-à-dire susceptibles d'être attaqués par l'un des objets du réseau :
- un module CLINT configuré pour les échanges avec le réseau étendu ;
- un module CLOC configuré pour les échanges avec le réseau local ;
- un module DOMOS comprenant un moteur de règles domotiques, ou règles applicables aux objets connectés du réseau local ;
- un serveur WEB SWEB.
Tous ces modules communiquent classiquement entre eux via un ou plusieurs bus de données (BUS). Ces modules sont représentés à titre d'exemple. D'autres composants logiciels et/ou matériels de la passerelle peuvent être considérés sensibles.

La figure 2 illustre seulement une manière particulière, parmi plusieurs possibles, de réaliser la passerelle 10, afin qu'elle effectue les étapes du procédé détaillé ci-dessus, en relation avec la figure 2. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où la passerelle résidentielle 10 est réalisée avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation sont décrits en relation avec une passerelle résidentielle de type Livebox^{®}, mais peuvent plus généralement être mis en œuvre dans toutes les passerelles, routeurs, serveurs DHCP, base DECT, et plus généralement dans tout équipement réseau situé en coupure entre l'objet communicant et le réseau de communication étendu.

La figure 3 présente les différentes étapes d'un mode de réalisation de l'invention.

On rappelle que le but de ce procédé de gestion est de placer en zone de confinement, ou quarantaine, des objets connectés du réseau local dont le comportement malicieux peut mettre en péril la passerelle domestique.

A cette fin, des informations relatives à l'objet sont acquises, et utilisées pour l'obtention ou la mise à jour de règles de sécurité destinées à restreindre les capacités de nuisance de l'objet. L'objet est placé dans une zone dite de confinement. Durant toute la durée du confinement, il est contraint par le procédé de respecter les règles. Par la suite, il peut être retiré de la zone de confinement, sous certaines conditions.

On va maintenant décrire les étapes du procédé selon un mode de réalisation de l'invention.

On notera que ce mode n'est restreint ni à un type d'objet connecté, ni à un protocole spécifique (WI-Fi, DECT-ULE, Bluetooth, etc).

Au cours d'une étape référencée E0, l'objet DECT ULE (16) tente de communiquer avec la passerelle (10). Il peut s'agir d'une demande de connexion, ou d'une demande d'appairage, ou plus largement d'un message quelconque de demande de communication.

La passerelle reçoit cette demande lors d'une étape E20, et récupère au moins un identifiant unique de l'objet, comme par exemple son adresse MAC, son identifiant IPUI (dans le cas d'un protocole de type DECT-ULE) ou UUID (dans le cas d'un protocole Bluetooth), ou IMSI (dans le cas d'un réseau mobile), etc. Cet identifiant est noté ID sur la figure.

D'autres informations sur l'objet, notées INF, peuvent être présentes dans le message, ou obtenues lors de l'étape E20, comme par exemple, et de manière non limitative :
- la puissance du signal reçu,
- le numéro de version matérielle et/ou logicielle de l'objet, ou de *firmware* (par exemple, numéro de version logicielle = 1.2.0, numéro de hardware = DT_XXXX, etc.)
- son type (smartphone, capteur de température, détecteur d'ouverture de porte, prise électrique, bouton permettant d'actionner des scénarios de domotique, etc.),
- les méthodes et/ou services exposés par l'objet, permettant de les distinguer plus finement (par exemple, une prise connectée d'un premier type peut remonter des informations sur sa consommation, alors qu'une autre prise de même type peut indiquer simplement son état électrique ON/OFF, une caméra peut transmettre des images fixes ou des vidéos, etc.)
- une donnée d'authentification utilisée lors d'un appairage préalable (par exemple sur la base d'un code PIN 0000 de sécurité faible ou 3535 de sécurité plus élevée),
- le nombre de tentatives d'appairage en échec (ou réussies) de l'objet,
- une référence de son constructeur, de son fournisseur, de son revendeur, etc.

Ces informations peuvent se trouver présentes dans le ou les messages émis par l'objet connecté, ou être obtenues par la passerelle via un autre moyen (par exemple, la passerelle peut avoir mémorisé des informations en relation avec l'adresse MAC de l'objet connecté dans sa mémoire, dans une base de données, etc.)

Par exemple, pour un objet, le processus d'obtention des informations INF peut être le suivant :
- La passerelle récupère, dans le message de demande de connexion, l'adresse MAC, la puissance de signal, l'IPUI de l'objet et sa version logicielle ;
- Puis elle accède à une base de données qui lui fournit son type, ses fonctions, etc.
   Dans ce cas, l'identifiant unique peut être par exemple l'adresse MAC et les informations INF sont constituées des autres données.

A l'issue de cette étape, en fonction des informations obtenues, la passerelle détermine au cours d'une étape E21 si l'objet doit faire l'objet d'un confinement ou non, en fonction de sa connaissance de l'objet.

En effet, si la passerelle connaît l'objet, c'est-à-dire qu'elle a déjà enregistré au moins l'identifiant (l'adresse MAC par exemple) et optionnellement d'autres informations (INF) relatives à cet objet, cela signifie qu'il est déjà appairé, ou a été appairé puis désappairé, etc. Dans ce cas, il est peut-être déjà confiné, ou ne pas nécessiter de confinement, auquel cas l'étape E21 est suivie de l'étape E23 qui sera exposée par la suite. En revanche si la passerelle ne connaît pas l'objet, elle va examiner la nécessité de le mettre en confinement en fonction des informations et des règles obtenues, auquel cas l'étape E21 est suivie de l'étape E22.

Au cours d'une étape référencée E22, le procédé de gestion sur la passerelle accède à une base de données (interne ou externe) notée ZINF, qui peut par exemple se trouver dans la base de données BD de la figure 2, ou sur un serveur externe, pour en extraire au moins une règle notée RULE concernant l'objet, en fonction des informations ID et INF. De telles règles peuvent être par exemple, et de manière non limitative :
- une limite (pourcentage maximum) d'utilisation de l'un des processeurs de la passerelle (processeur principal, processeur du module radio /Wi-fi ...),
- une limite d'utilisation d'un bus (matériel au logiciel) de la passerelle, en termes de débit ou nombre d'utilisations,
- une interdiction ou restriction d'utilisation de certains programmes ou interfaces de la passerelle (par exemple les modules de communication comme l'interface USB, ou un serveur WEB, des programmes d'administration de la passerelle, etc.),
- une interdiction ou restriction d'émission de certains types de messages (interdiction ou remontée d'alertes, etc.),
- une restriction d'accès à des éléments de sécurité (clés de sécurité, etc.),
- une restriction d'accès à l'une des mémoires de la passerelle, pour éviter la violation de zones sensibles ou une saturation ; un objet malicieux peut par exemple surcharger la mémoire en tentant de changer plusieurs fois son adresse MAC et saturer de ce fait la table ARP de la passerelle (le protocole ARP- Address Resolution Protocol- est un protocole standard pour récupérer l'adresse MAC d'un terminal à partir d'une adresse IP),
- une obligation de changer régulièrement certains identifiants de l'objet (pour respecter par exemple le mode dit *Privacy* du protocole Bluetoth Low Energy - BLE),
- une interdiction d'installer un composant logiciel sur la passerelle ; en effet une simple remontée de données (comme la température) par un objet connecté pourrait être exploitée par un attaquant. Celui-ci pourrait par exemple, en profiter pour y injecter un programme logiciel malveillant ou des données malformées (de type shell, SQL, web, etc.) afin de profiter d'une faille dans la passerelle ou dans les plateformes de service
- une restriction des protocoles utilisables par l'objet s'il dispose de plusieurs types ou versions de protocole ; par exemple, si le point d'accès Wi-Fi de la passerelle supporte à la fois les protocoles de chiffrement TKIP et CCMP, l'objet n'a le droit de communiquer qu'en CCMP afin de l'empêcher d'exploiter des vulnérabilités propres à TKIP ; si le point d'accès Wi-Fi de la passerelle supporte à la fois les communications à 2.4Ghz et 5Ghz, l'objet ne peut se connecter sur les deux à la fois,
- etc.

Une telle règle peut être absolue (par exemple, ne pas dépasser 5% d'utilisation d'un processeur) ou plus flexible, avec une possibilité de modification au cours du temps.

Le tableau suivant montre, à titre d'exemple, quelques règles possibles pour un objet connecté de type caméra (le protocole UPnP IGD cité - Universal Plug and Play Internet Gateway Device - est un protocole réseau permettant d'ouvrir des ports sur la gateway pour que la caméra soit joignable depuis l'extérieur).

**[Table 1]**

| Informations obtenues (ID, INF) | | |
|---|---|---|
| Identifiants | Fonctions | Flux manipulés |
| Adresse MAC | capture d'image | flux image |
| Marque XX | zoom | flux image zoomée |
| | horodatage | flux vidéo |

| Règles | | |
|---|---|---|
| Interdiction d'accès aux modules BLE, Zigbee, au serveur SWEB | Maximum d'utilisation du processeur : 2% | Interdiction de flux vidéo (pour limiter l'usage du processeur) |
| | Interdiction d'ouvrir des ports sur la passerelle par UPnP IGD. | |

On notera que, lors de cette étape E22, une règle nouvelle peut être créée, ou une règle existante modifiée.

Lors d'une étape E23, il est déterminé si l'objet doit être mis ou non en zone de confinement. A cette fin, il est procédé à un test permettant de vérifier qu'au moins une règle a été obtenue pour l'objet (si aucune règle ne lui est associée, il est inutile de le confiner) ou si une règle existante doit être modifée. Dans l'affirmative, il peut être vérifié si cette règle justifie la mise en confinement (par exemple si la passerelle est peu chargée, ou si l'utilisateur le décide, la mise en confinement peut être omise). Dans ce cas l'étape E23 est suivie de l'étape E25 de communication.

Sinon il est procédé lors de l'étape E24 à un enregistrement de l'objet dans la zone de confinement notée ZCONF sur la figure 2. La zone de confinement peut se trouver dans n'importe quelle zone mémoire de la passerelle (ou accessible depuis celle-ci), sécurisée ou non. L'enregistrement comporte notamment:
- une identité de l'objet (identifiant unique ID et/ou information INF) ;
- les règles obtenues pour cet objet ;
- optionnellement, le module de communication de l'objet dans la passerelle (module logiciel et/ou matériel CA/CB permettant à la passerelle de communiquer avec l'objet, aussi appelé « client »). Le module de communication de l'objet peut aussi être à l'extérieur de la zone de confinement, et éventuellement partagé entre plusieurs objets.

Lors des étapes suivantes E5, E25, E26 et E27, une communication « standard » s'établit entre l'objet et la passerelle. Par exemple, la caméra réalise des captures d'images fixes et de vidéos et les transmet à la passerelle.

Lors de l'étape E25, optionnelle, d'apprentissage, l'objet est observé dans le but de mettre à jour ou de créer une règle ; il s'agit d'un mode dit « dynamique » au cours duquel un apprentissage est réalisé : on suppose l'objet « sain » ou « fiable » dans un premier temps, puis on observe pendant une période de temps donnée (par exemple une journée, une semaine, etc.) les interactions de l'objet communicant avec les composants de la passerelle en termes de nature, volume et fréquence des accès aux composants. Les données d'observation sont selon cet exemple enregistrées dans une base de données ou mémoire ZAPP, puis analysées par programmation logique inductive, ou logique floue, ou toute autre méthode d'apprentissage automatique (en anglais « machine learning »), afin d'en déduire un ensemble de préceptes caractéristiques d'un fonctionnement « normal » de l'objet communicant en relation avec la passerelle. Selon l'exemple précédent de la caméra, cette période d'apprentissage peut correspondre à l'acquisition des comportements de la caméra sur une journée : un comportement normal sur 24 heures peut correspondre à 3 déclenchements de la caméra aboutissant à trois flux vidéo d'une moyenne de 3 secondes avec un débit de 50 kilobits par seconde. Selon un autre exemple, un détecteur d'ouverture de porte peut présenter un comportement normal de 40 ouvertures de portes par jour. Ces comportements « normaux » servent à définir des règles (RULE) similaires à celles obtenues de l'étape E22. Par exemple si la caméra se déclenche 3 fois par jour, on peut lui interdire de dépasser 2% d'utilisation du CPU, ou de se déclencher plus de 5 fois par jour, etc.

Dans le cas d'une mise à jour, une règle existante peut être affinée par apprentissage (par exemple la règle initiale interdit à l'objet de dépasser 2% d'utilisation du CPU, mais une observation par apprentissage peut permettre de réduire ce pourcentage, etc.)

A l'issue de cette étape E25, on peut tester la génération ou modification de l'une des règles lors d'une étape E26 et revenir le cas échéant à l'étape E21 pour décider si l'objet muni de ces nouvelles règles, doit entrer en confinement (E21) et modifier le cas échéant l'enregistrement en zone de confinement, avec la nouvelle règle ou la règle modifiée.

Lors de l'étape E27, on considère que l'objet, toujours en communication avec la passerelle, est muni d'au moins une règle. On observe l'objet pour détecter un comportement illégal si l'on enfreint une de ces règles. Par exemple le programme PGR sur la passerelle résidentielle 10 peut détecter que la caméra 16 fait déborder la mémoire, utilise le CPU à 50%, envoie des messages inappropriés, utilise trop l'un des bus, utilise le serveur Web, chiffre le disque dur de la passerelle, etc.

Lors de l'étape E28 qui la suit, si l'objet a enfreint une règle, il est considéré comme malveillant, ou tout au moins suspect. Une action est alors effectuée sur l'objet, qui peut dépendre de la gravité de l'infraction : en cas d'infraction grave, il peut y avoir rejet - noté REJECT sur la figure, blocage de l'opération en cours, désappairage, déconnexion de l'objet, génération d'une alerte ; en cas d'infraction moins grave, il peut y avoir modification d'une règle, par exemple pour la rendre plus contraignante, etc. A cet effet, selon une variante, on peut prévoir de classer les règles en fonction de la gravité des infractions que leur violation entraîne, en leur affectant un indice de gravité (classification en règles « strictes » d'indice élevé, dont l'infraction est interdite, ou en règles « souples » d'indice plus faible, qui peuvent être adaptées, ou affectation de priorités aux règles, etc.). Si l'objet n'a pas enfreint de règle, l'étape E28 peut être suivie par un retour à l'étape E25 de communication.

L'étape E28 peut aussi être suivie de l'étape E29 au cours de laquelle on peut tester, de manière facultative, si une adaptation du confinement de l'objet est indispensable ; en effet, il peut être nécessaire de modifier une règle en fonction d'un critère de modification. Plusieurs critères peuvent être utilisés, de manière non limitative :
- l'infraction d'une règle « souple », constatée lors de l'étape E27/E28 ;
- la modification de toute information utilisée pour générer l'une des règles relatives à l'objet (par exemple, une augmentation des capacités de la passerelle, la présence de l'utilisateur près de l'objet connecté, une nouvelle certification de l'objet, etc.)
- la mise à jour de l'objet ; par exemple, lors de la détection d'une nouvelle faille sur un parc d'objets d'un certain type, on pourrait rendre la règle plus contraignante pour limiter les risques.

Dans ce cas l'étape E29 est suivie de l'étape E21 ou de l'étape E22 au cours de laquelle la règle sera remise à jour.

L'étape E29 peut aussi être suivie d'une étape E30 au cours de laquelle on peut tester, de manière facultative, si l'objet peut être retiré de la zone de confinement. Pour ce test, plusieurs critères de déconfinement peuvent être utilisés, de manière non limitative :
- l'évaluation d'un timer de confinement (mesure du temps écoulé depuis la connexion de l'objet),
- la modification de toute information utilisée pour générer l'une des règles relatives à l'objet (par exemple, une augmentation des capacités de la passerelle, la présence de l'utilisateur près de l'objet connecté, une nouvelle certification de l'objet, etc.),
- la mise à jour de l'objet ; par exemple, lors de la détection d'une nouvelle faille sur un parc d'objets d'un certain type, on pourrait confiner tous les objets de ce type et les déconfiner seulement une fois que ceux-ci se sont mis à jour.
- etc.

Si ce test est négatif (l'objet n'est pas/plus en confinement ou il doit le rester), l'étape E29 est suivie de l'étape E25 de communication.

Si ce test est positif, au cours de l'étape E31, l'objet peut être retiré de la zone de confinement. Par exemple, la zone mémoire réservée à l'objet est déplacée de la zone de confinement vers une autre zone, ou l'objet est effacé de la zone de confinement, etc. Par la suite, il peut par exemple revenir en communication.

La figure 3 illustre seulement une manière particulière, parmi plusieurs possibles, de réaliser le procédé de gestion. De nombreuses variantes sont envisageables. Notamment :
- Dans un mode de réalisation de l'invention, il est également possible de procéder à un déverrouillage de la sécurité, ou à une modification de ladite règle de sécurité créée, lors d'une détection de présence d'un utilisateur habilité (par exemple l'administrateur du réseau domestique, ou un utilisateur dont l'identifiant est dûment enregistré par la passerelle résidentielle 10) dans le réseau domestique. Ainsi, il est possible par exemple d'assouplir les règles de sécurité, quand on détecte que l'utilisateur est physiquement présent dans le réseau de communication local, et donc à même de surveiller le comportement de ses objets communicants. On évite ainsi des problèmes liés à une sécurité trop stricte, qui peut avoir un impact négatif sur l'utilisation des services du réseau de communication local. Selon les techniques de l'art antérieur, les règles de sécurité associées à un objet communicant sont statiques, sans qu'il soit prévu de les adapter, par exemple de les renforcer, en cas d'absence de l'utilisateur de son domicile. Il peut donc être avantageux, comme mentionné auparavant, de prévoir des règles de sécurité « souples », qui s'appliquent par défaut lorsque l'utilisateur n'est pas chez lui, et de pouvoir les alléger pour les rendre moins contraignantes quand la présence d'un utilisateur habilité est détectée à proximité de l'objet communicant, ou dans l'écosystème du réseau de communication local. Selon un autre exemple, une règle s'appliquant à un assistant vocal ne doit pas être active quand il n'y a personne à la maison, il est donc intéressant de modifier les règles s'y appliquant.

Selon une autre variante, un tel procédé comprend également une mémorisation de l'interaction bloquée dans un journal d'interactions suspectes et/ou une alerte d'un utilisateur dudit objet communicant. Ce journal d'interactions suspectes pourra avantageusement être consulté par l'utilisateur ou l'administrateur du réseau de communication local. Il est également possible que la détection d'un comportement déviant d'un objet communicant déclenche automatiquement l'émission d'une alerte vers l'utilisateur ou l'administrateur du réseau de communication local, par exemple par envoi d'un message vers ce dernier. Une telle alerte peut également être déclenchée quand un certain nombre d'interactions suspectes a été mémorisé dans le journal.

## Revendications

1. Procédé de gestion d'une passerelle domestique (10) d'un réseau de communication local, ladite passerelle comportant une pluralité de composants, dits composants sensibles (MEM, PROC, BUS, CLINT, CLOC, SWEB, DOMOS), ledit réseau comprenant au moins un objet communicant (14, 15, 16) apte à être connecté audit réseau via la passerelle, le procédé comprenant sur un dispositif de gestion :
- une étape d'acquisition (E22) d'au moins une règle de sécurité (RULE), relative à au moins une interaction possible dudit objet avec au moins un desdits composants de ladite passerelle ;
- une étape de confinement comportant un enregistrement (E24) de données de l'objet dans une zone mémoire dite de confinement (ZCA, ZCB), lesdites données comportant au moins une donnée d'identification de l'objet (ID) et au moins ladite règle de sécurité (RULE)
- une étape d'observation (E27) mettant en œuvre une observation d'au moins une interaction dudit objet communicant avec au moins un desdits composants de ladite passerelle ;
- une étape de décision (E28), en fonction de ladite observation, d'une action au moins sur ledit objet si l'objet enfreint ladite au moins une règle,.

2. Procédé selon la revendication 1, comportant en outre une étape de sortie (E31) de confinement de l'objet (ZCA, ZCB), lorsqu'un critère de déconfinement (E30) est rempli, .au cours de laquelle ledit enregistrement est retiré de ladite zone de confinement.

3. Procédé selon la revendication 1, selon lequel ladite au moins une règle de sécurité est acquise après une phase de détection (E21) de la connexion dudit objet communicant inconnu à ladite passerelle.

4. Procédé selon la revendication 1, selon lequel ladite au moins une règle de sécurité est acquise via une étape d'apprentissage du comportement (E25) de l'objet.

5. Procédé selon la revendication 1, selon lequel ladite au moins une règle de sécurité est acquise (E22) en fonction d'une donnée caractéristique (INF) de l'objet.

6. Procédé selon la revendication 1, selon lequel ladite au moins une règle de sécurité associée audit objet communicant comprend au moins un élément parmi :
- un volume maximum de données que l'objet communicant est autorisé à mémoriser dans la passerelle,
- un volume maximum de données que l'objet communicant est autorisé à échanger sur l'un des bus de données de la passerelle,
- un pourcentage maximum d'utilisation d'un processeur de la passerelle, ou
- un accès à un module de communication de la passerelle,
- un accès à un module logiciel de la passerelle.

7. Procédé selon la revendication 1, selon lequel, en cas de détection d'une interaction dudit objet communicant avec au moins un composant contraire à ladite règle de sécurité créée, ladite action sur l'objet connecté peut être choisie parmi :
- une modification (E30, E22) de ladite au moins une règle de sécurité ;
- une étape de blocage de ladite interaction ;
- un rejet (E28) de l'objet ;
- un désappairage (E28) de l'objet.

8. Procédé selon la revendication 1, selon lequel ladite au moins une règle de sécurité est affectée d'un indice de gravité, et en ce que l'action sur l'objet est choisie en fonction de cet indice.

9. Procédé selon la revendication 1, selon lequel ladite au moins une règle de sécurité peut être modifiée (E22) en cas de détection d'une modification dans le contexte de la passerelle domestique.

10. Dispositif de gestion d'une passerelle domestique (10) d'un réseau de communication local, ladite passerelle comportant une pluralité de composants, dits composants sensibles (MEM, PROC, BUS, CLINT, CLOC, SWEB, DOMOS), ledit réseau comprenant au moins un objet communicant (14, 15, 16) et apte à être connecté audit réseau via la passerelle, le dispositif comprenant les modules suivants :
- un module d'acquisition (PROC, E22) d'au moins une règle de sécurité (RULE), relative à au moins une interaction possible de l'objet avec au moins un desdits composants de la passerelle ;
- un module de confinement comportant un module d'enregistrement de données de l'objet dans une zone mémoire dite de confinement (ZCA, ZCB), lesdites données comportant au moins une donnée d'identification de l'objet (ID) et au moins ladite règle de sécurité (RULE)
- un module d'observation (PROC, E27) mettant en œuvre une observation d'au moins une d'interaction dudit objet communicant avec au moins un desdits composants de ladite passerelle ;
- un module de décision (CTRL, E28, E29, E30), en fonction de ladite observation, d'une action au moins à effectuer sur ledit objet si l'objet enfreint ladite au moins une règle.

11. Passerelle domestique incluant un dispositif selon la revendication 10.

12. Programme d'ordinateur (PROG) comportant des instructions qui, lorsque le programme est exécuté par un ordinateur, conduisent celui-ci à exécuter les étapes d'un procédé de gestion selon les revendications 1 à 9.

## Patentansprüche

1. Verfahren zur Verwaltung eines Home-Gateways (10) eines lokalen Kommunikationsnetzwerks, wobei das Gateway eine Mehrzahl von Komponenten, sensible Komponenten (MEM, PROC, BUS, CLINT, CLOC, SWEB, DOMOS) genannt, umfasst, wobei das Netzwerk mindestens ein kommunizierendes Objekt (14, 15, 16) beinhaltet, das dazu geeignet ist, über das Gateway mit dem Netzwerk verbunden zu werden, wobei das Verfahren in einer Verwaltungsvorrichtung Folgendes beinhaltet:
- einen Schritt des Erfassens (E22) mindestens einer Sicherheitsregel (RULE), die sich auf mindestens eine mögliche Interaktion des Objekts mit mindestens einer der Komponenten des Gateways bezieht;
- einen Schritt des Isolierens, umfassend ein Aufzeichnen (E24) von Daten des Objekts in einem sogenannten Isolierungsspeicherbereich (ZCA, ZCB), wobei die Daten mindestens ein Identifikationsdatum des Objekts (ID) und mindestens die Sicherheitsregel (RULE ) umfassen
- einen Schritt des Beobachtens (E27), der ein Beobachten mindestens einer Interaktion des kommunizierenden Objekts mit mindestens einer der Komponenten des Gateways implementiert;
- einen Schritt des Entscheidens (E28), in Abhängigkeit von der Beobachtung, mindestens einer Einwirkung auf das Objekt, wenn das Objekt die mindestens eine Regel verletzt.

2. Verfahren nach Anspruch 1, umfassend ferner einen Schritt des Beendens (E31) der Isolierung des Objekts (ZCA, ZCB), wenn ein Entisolierungskriterium (E30) erfüllt ist, während dessen die Aufzeichnung aus dem Isolierungsbereich entfernt wird.

3. Verfahren nach Anspruch 1, wobei die mindestens eine Sicherheitsregel nach einer Phase des Detektierens (E21) der Verbindung des unbekannten kommunizierenden Objekts mit dem Gateway erfasst wird.

4. Verfahren nach Anspruch 1, wobei die mindestens eine Sicherheitsregel über einen Schritt des Lernens des Verhaltens (E25) des Objekts erfasst wird.

5. Verfahren nach Anspruch 1, wobei die mindestens eine Sicherheitsregel in Abhängigkeit von einem charakteristischen Datum (INF) des Objekts erfasst wird (E22).

6. Verfahren nach Anspruch 1, wobei die mindestens eine Sicherheitsregel, die dem kommunizierenden Objekt zugeordnet ist, mindestens ein Element unter den Folgenden beinhaltet:
- ein maximales Datenvolumen, welches das kommunizierende Objekt in dem Gateway speichern darf,
- ein maximales Datenvolumen, welches das kommunizierende Objekt über einen der Datenbusse des Gateways austauschen darf,
- ein maximaler Prozentsatz der Auslastung eines Prozessors des Gateways, oder
- ein Zugriff auf ein Kommunikationsmodul des Gateways,
- ein Zugriff auf ein Softwaremodul des Gateways.

7. Verfahren nach Anspruch 1, wobei im Fall der Detektion einer Interaktion des kommunizierenden Objekts mit mindestens einer Komponente, die gegen die erstellte Sicherheitsregel verstößt, die Einwirkung auf das verbundene Objekt unter den Folgenden gewählt werden kann:
- eine Änderung (E30, E22) der mindestens einen Sicherheitsregel;
- ein Schritt des Blockierens der Interaktion;
- ein Zurückweisen (E28) des Objekts;
- ein Entkoppeln (E28) des Objekts.

8. Verfahren nach Anspruch 1, wobei der mindestens einen Sicherheitsregel ein Schweregradindex zugewiesen wird, und wobei die Einwirkung auf das Objekt in Abhängigkeit von diesem Index gewählt wird.

9. Verfahren nach Anspruch 1, wobei die mindestens eine Sicherheitsregel im Fall der Detektion einer Änderung im Kontext des Home-Gateways geändert werden kann (E22).

10. Vorrichtung zur Verwaltung eines Home-Gateways (10) eines lokalen Kommunikationsnetzwerks, wobei das Gateway eine Mehrzahl von Komponenten, sensible Komponenten (MEM, PROC, BUS, CLINT, CLOC, SWEB, DOMOS) genannt, umfasst, wobei das Netzwerk mindestens ein kommunizierendes Objekt (14, 15, 16) beinhaltet, das geeignet ist, über das Gateway mit dem Netzwerk verbunden zu werden, wobei die Vorrichtung die folgenden Module beinhaltet:
- ein Erfassungsmodul (PROC, E22) zum Erfassen mindestens einer Sicherheitsregel (RULE), die sich auf mindestens eine mögliche Interaktion des Objekts mit mindestens einer der Komponenten des Gateways bezieht;
- ein Isolierungsmodul, umfassend ein Modul zum Aufzeichnen von Daten des Objekts in einem sogenannten Isolierungsspeicherbereich (ZCA, ZCB), wobei die Daten mindestens ein Identifikationsdatum des Objekts (ID) und mindestens die Sicherheitsregel (RULE) umfassen
- ein Beobachtungsmodul (PROC, E27), das ein Beobachten mindestens einer Interaktion des kommunizierenden Objekts mit mindestens einer der Komponenten des Gateways implementiert;
- ein Entscheidungsmodul (CTRL, E28, E29, E30) zum Entscheiden, in Abhängigkeit von der Beobachtung, mindestens einer an dem Objekt vorzunehmenden Einwirkung, wenn das Objekt die mindestens eine Regel verletzt.

11. Heim-Gateway, das eine Vorrichtung nach Anspruch 10 aufweist.

12. Computerprogramm (PROG), das Anweisungen umfasst, die bei der Ausführung des Programms durch einen Computer diesen veranlassen, die Schritte eines Verfahrens zur Verwaltung nach den Ansprüchen 1 bis 9 auszuführen.

## Claims

1. Method for managing a home gateway (10) of a local-area communication network, said gateway comprising a plurality of components, called the sensitive components (MEM, PROC, BUS, CLINT, CLOC, SWEB, DOMOS), said network comprising at least one communicating object (14, 15, 16) able to be connected to said network via the gateway, the method comprising on a managing device:
- a step of acquiring (E22) at least one security rule (RULE), relating to at least one possible interaction of said object with at least one of said components of said gateway;
- a confining step comprising recording (E24) data of the object in a memory region, called the confinement memory region (ZCA, ZCB), said data comprising at least one identification datum of the object (ID) and at least said security rule (RULE);
- a step of observing (E27), implementing an observation of at least one interaction of said communicating object with at least one of said components of said gateway;
- a step of deciding (E28), depending on said observation, at least one action to take regarding said object if the object infringes said at least one rule.

2. Method according to Claim 1, further comprising a step of withdrawing (E31) the object (ZCA, ZCB) from confinement when an unconfining criterion (E30) is met, in which step said recording is removed from said confinement region.

3. Method according to Claim 1, wherein said at least one security rule is acquired after a phase of detecting (E21) connection of said unknown communicating object to said gateway.

4. Method according to Claim 1, wherein said at least one security rule is acquired via a step of learning the behaviour (E25) of the object.

5. Method according to Claim 1, wherein said at least one security rule is acquired (E22) depending on a characteristic datum (INF) of the object.

6. Method according to Claim 1, wherein said at least one security rule associated with said communicating object comprises at least one element among:
- a maximum volume of data that the communicating object is permitted to store in the gateway,
- a maximum volume of data that the communicating object is permitted to exchange over one of the data buses of the gateway,
- a maximum percentage of utilization of a processor of the gateway,
- access to a communication module of the gateway, or
- access to a software module of the gateway.

7. Method according to Claim 1, wherein, in case of detection of an interaction of said communicating object with at least one component contrary to said created security rule, said action to take regarding the connected object may be chosen from:
- modifying (E30, E22) said at least one security rule;
- a step of blocking said interaction;
- rejecting (E28) the object;
- unpairing (E28) the object.

8. Method according to Claim 1, wherein said at least one security rule is assigned a severity rating, and wherein the action to take regarding the object is selected depending on this rating.

9. Method according to Claim 1, wherein said at least one security rule may be modified (E22) in case of detection of a modification in the context of the home gateway.

10. Device for managing a home gateway (10) of a local-area communication network, said gateway comprising a plurality of components, called the sensitive components (MEM, PROC, BUS, CLINT, CLOC, SWEB, DOMOS), said network comprising at least one communicating object (14, 15, 16) able to be connected to said network via the gateway, the device comprising the following modules:
- a module for acquiring (PROC, E22) at least one security rule (RULE), relating to at least one possible interaction of the object with at least one of said components of the gateway;
- a confining module comprising a module for recording data of the object in a memory region, called the confinement memory region (ZCA, ZCB), said data comprising at least one identification datum of the object (ID) and at least said security rule (RULE);
- a module for observing (PROC, E27), implementing an observation of at least one interaction of said communicating object with at least one of said components of said gateway;
- a module for deciding (CTRL, E28, E29, E30), depending on said observation, at least one action to take regarding said object if the object infringes said at least one rule.

11. Home gateway including a device according to Claim 10.

12. Computer program (PROG) comprising instructions that, when the program is executed by a computer, cause the latter to execute the steps of a managing method according to Claims 1 to 9.
